# EUROPEAN PATENT SPECIFICATION

(11) **EP 3 822 837 B1**
(45) Date of publication and mention of the grant of the patent: **03.01.2024**
(21) Application number: 20179765.1
(22) Date of filing: 12.06.2020
(51) Int. Cl.: G06F 21/75

(54) **METHOD FOR INCREASING SECURITY OF EMBEDDED PROCESSORS AND APPARATUS PERFORMING THE METHOD**
VERFAHREN ZUR ERHÖHUNG DER SICHERHEIT VON EINGEBETTETEN PROZESSOREN UND VORRICHTUNG ZUR DURCHFÜHRUNG DES VERFAHRENS
PROCÉDÉ POUR AUGMENTER LA SÉCURITÉ DE PROCESSEURS INTÉGRÉS ET APPAREIL METTANT EN UVRE CE PROCÉDÉ

(30) Priority: 15.11.2019 EP 19209517
(43) Date of publication of application: 19.05.2021
(73) Proprietor: Shenzhen Goodix Technology Co., Ltd., Shenzhen, Guangdong 518045 (CN)
(72) Inventor: Krause, Markus, 01307 Dresden (DE)
(74) Representative: Lippert Stachow Patentanwälte Rechtsanwälte Partnerschaft mbB

(56) References cited:
- US-B1- 6 575 373
- US-B1- 7 188 259
- US-B2- 8 660 262

## Description

The invention relates to a method for increasing security of embedded processors and an apparatus performing the method. The starting point of the present invention can be any embedded processor core in a System-on-Chip (SoC), which is used to perform some safety-critical tasks. The only requirement is the availability of debug/halt instructions and the license to modify the core in a way that allows this.

Monitoring power consumption and core activity over time to gain knowledge about program branches ("if-then-else"), in particular to find out which branch of the program ("then" or "else") has been taken, is a common technique by attackers. This information can then be used e. g. to do crypto-analysis to retrieve encryption keys and other information that shall be protected. To avoid or prevent this, instructions or wait times without functional meaning are inserted to overlay the actual program execution.

There are several approaches known to do this, see for example US 8,660,262 B2, US 7 188 259 B1 and US 6,575,373 B1, but one effective approach with a slim hardware overhead is presented in the present invention.

Therefore, it is an objective of the present invention to provide a method that only needs a slim hardware overhead to increase the security of embedded processors of a SoC and is completely transparent to the core logic of the processor.

The present invention is defined and limited by the scope of the appended claims. In the following, embodiments not falling within the scope of the appended claims are to be interpreted only as examples useful for understanding the present invention.

The external post-processing logic ensures that the randomness is designed to be relatively evenly distributed so that there are no very long halts or even no longer halts over a longer period of time.

The pre-determined rate should be calculated in a way that the inserted halts or neutral instructions are mostly evenly distributed and that insertion of the gaps does not slow down the actual program too much. It depends very much on the use case how much interruption the function code of the processor core can tolerate. So, the size of the rate at which halts or the neutral instructions are inserted into the functional code depends on the use case. For example, the rate could be set so that the maximum slowdown of the program is 50%, more preferred between 15%-30% in comparison to a program running without the additional halts or neutral insertions.

The central idea is to use existing debug infrastructure within the processor core of the embedded processor of the SoC to implement the insertion of randomly controlled wait times by using neutral instructions that do not affect an actual program code of the processor. By inserting instructions or wait times without functional meaning the actual program code is overlaid and hence it becomes much more complicated for an attacker to find out which branch of the program ("then" or "else") has been taken. The insertion of neutral instructions in the program code is complemented by some external logic to shape the rate of interruptions, so that the wait event insertion does not fall below or rises above a pre-determined rate in order to still ensure a certain runtime performance of the processor as defined above. At the same time, the implementations hardware remains small without too much overhead in terms of power or silicon area of the SoC.

In the inventive method, the neutral instructions are standard instruction set architecture (ISA)- compliant breakpoint instruction and hold mechanisms of the processor core. The ISA includes privileged instructions as well as additional functionality required for running operating systems and attaching external devices. This has the advantage that the method is completely transparent to the core logic of the processor itself as it only builds on existing debug infrastructure.

In a variant of the inventive method, the neutral instructions are an addition or other arithmetics with register 0 as target of the processor core if the instruction set architecture has a hard-wired register. Hence, the usage of 'neutral' instructions that do not affect the actual program depends on the architecture, which is used. For a RISC-V architecture it is a valid approach using an addition or other arithmetics with register 0 as target, as this is a fixed, read-only static 0 value register, so essentially any arithmetic operation with this register as a result target would do ,something', but not change anything. For that to work, the core itself would require additional sideband-signals to enable this instruction insertion, sidelining the normal path through instruction calls from memory.

In a variant of the inventive method, the external logic intercepts debug controls of the processor core and arbitrates actual debug accesses and randomly inserted neutral instructions by multiplexing real debug signals from a debugger and the random signal formed by the neutral instructions from a pseudo- or from a true-random-number-generator. The pseudo- or true-random-number-generator generates random halts. For this to work properly, real debug signals take precedence and the interface which randomly inserts halt and continue signals is blocked as long as an external debugger is attached and halts the core. This randomized pause or halt and step signals are inserted in the program flow of the processor core.

According to a further variant of the inventive method, the inserted randomly controlled wait times are generated by the pseudo- or true-random-number-generator using an initial seed value, which is provided by a random source of the SoC and the initial seed value is used to generate the randomness of the wait times.

In its simplest form, the pseudo-random-number-generator (PRNG) can be a Linear-Feedback-Shift-Register (LFSR).

The random source providing the seed value for the random-number-generator can be thermal noise or asynchronously captured ring-oscillators or any other random source depending on what is available in the SoC.

The objective of the invention will also be solved by an apparatus according to claim 7. The apparatus is suitable to perform the inventive method described above. The apparatus comprises an embedded processor, a pseudo- or true-random-number-generator, a random source for generating an initial seed value for the random-number-generator, and logic configured to post-process randomly controlled wait times or instructions forming a random signal to ensure that the random signal is inserted within a pre-determined rate.

The solution provided by the inventive method and apparatus is completely transparent to the core logic of the embedded processor of the SoC itself as it only builds on existing debug infrastructure. This way the same processor core can also be used as a non-secured variant and the modular approach can easily be combined.

The invention will be explained in more detail using exemplary embodiments.

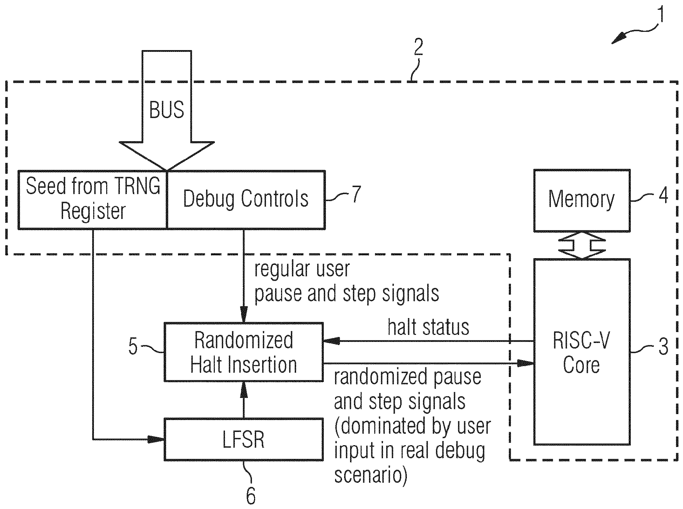

The appended drawing shows
- Fig 1: Processor core with external logic for performing the inventive method.

The figure shows a processor core using exemplarily a small RSIC-V instruction set based processor core in a System-on-Chip (SoC) to perform some security critical tasks. A Pseudo-Random-Number-Generator (PRNG), designed in its simplest form as a Linear-Feedback-Shift-Register (LFSR) accepts an initial seed value provided by a true-random-number-generator register. The seed value for the PRNG, hence the LFSR, can be provided by thermal noise, asynchronously captured ring-oscillators or the like. It is important to ensure a certain runtime performance of the processor, therefore the rate of interruptions, hence the wait event insertion or the usage of an addition or other arithmetics with register '0' as target, need to be implemented in a pre-determined rate. This rate is determined in advance by checking the requirements of the actual use-case and ensuring that the interruption rate does not exceed 50%. In practice, a rate between 15-30% has proven to be effective.

The insertion of wait events can be for example done by shifting the LFSR value and taking a 3 bit slice of it, generating an interruption rate of every 4-32 cycles. Furthermore, this can be changed arbitrarily but has to be suited to the performance requirements of the application. The external logic intercepts debug controls of the processor core and arbitrates actual debug accesses and randomly inserted wait times by a multiplexer, which gives precedence to the real external debugger.

### Commsolid GmbH

### 01099 Dresden

### Method for increasing security of embedded processors and apparatus performing the method

### List of Reference Signs

- 1: system-on-chip
- 2: processor
- 3: processor core
- 4: Memory
- 5: external logic
- 6: pseudo-random-number-generator, e.g. a Linear-Feedback-Shift-Register
- 7: debug infrastructure

## Claims

1. A method for increasing security of an embedded processor (2) of a system-on-chip (1) by using an existing debug infrastructure of a processor core (3) of the embedded processor (2), wherein neutral instructions whose insertion pattern forms a random signal and do not affect an actual program code of the processor (2) are inserted in the actual program code, the actual program code is performed by the processor (2), wherein the debug infrastructure is used to implement the insertion of the neutral instructions, and wherein an external logic (5) out of the processor core postprocesses the random signal to ensure that the neutral instructions are inserted within a pre-determined rate, wherein the neutral instructions are standard instruction set architecture compliant breakpoint instructions and hold mechanisms of the processor core (3) .

2. The method according to claim 1, wherein the neutral instructions are an addition or other arithmetics with register 0 as target of the processor core (3) if the instruction set architecture has a hard-wired register.

3. The method according to claim 1, wherein the external logic (5) intercepts debug controls of the processor core (3) and arbitrates actual debug accesses and the randomly inserted neutral instructions by multiplexing real debug signals from a debugger and the randomly inserted neutral instructions generated by a pseudo- or from a true-random-number-generator (6).

4. The method according to claim 3, wherein the inserted randomly controlled neutral instructions are generated by the pseudo- or the true-random-number-generator (6) using an initial seed value which is provided by a random source of the SoC.

5. The method according to claims 3 or 4, wherein the pseudo-random-number-generator (6) is a Linear-Feedback-Shift-Register.

6. The method according to claim 4, wherein the random source is thermal noise or asynchronously captured ring-oscillators.

7. An apparatus configured to perform the method according to claim 1 to 6, comprising an embedded processor (2), a debug infrastructure of a processor core (3) of the embedded processor (2), wherein the debug infrastructure is configured to implement an insertion of randomly controlled neutral instructions that do not affect an actual program code of the processor, the apparatus further comprises a pseudoor a true-random-number-generator (6), a random source for generating an initial seed value for the random-number-generator (6), and logic (5) configured to post-process a random signal, which is formed by the random insertion pattern of the neutral instructions to ensure that the neutral instructions are inserted within a pre-determined rate.

## Patentansprüche

1. Verfahren zur Erhöhung der Sicherheit eines eingebetteten Prozessors (2) eines System-on-Chip (1) durch Verwendung einer vorhandenen Debug-Infrastruktur eines Prozessorkerns (3) des eingebetteten Prozessors (2), wobei neutrale Anweisungen, deren Einfügungsmuster ein Zufallssignal bildet, und die keinen Einfluss auf den eigentlichen Programmcode des Prozessors (2) haben, in den eigentlichen Programmcode eingefügt werden, wobei der eigentliche Programmcode von dem Prozessor (2) durchgeführt wird, wobei die Debug-Infrastruktur verwendet wird, um das Einfügen der neutralen Anweisungen zu implementieren und wobei eine externe Logik (5) aus dem Prozessorkern heraus das Zufallssignal nachverarbeitet, um sicherzustellen, dass die neutralen Anweisungen mit einer vorgegebenen Rate eingefügt werden, wobei die neutralen Anweisungen mit der Standard-Befehlssatzarchitektur konforme Haltepunktanweisungen und Haltemechanismen des Prozessorkerns (3) sind.

2. Verfahren nach Anspruch 1, wobei die neutralen Anweisungen eine Addition oder eine andere Arithmetik mit dem Register 0 als Ziel des Prozessorkerns (3) sind, wenn die Befehlssatzarchitektur ein fest verdrahtetes Register aufweist.

3. Verfahren nach Anspruch 1, wobei die externe Logik (5) Debug-Steuerungen des Prozessorkerns (3) abfängt und über tatsächliche Debug-Zugriffe und die zufällig eingefügten neutralen Anweisungen entscheidet, indem sie echte Debug-Signale von einem Debugger und die zufällig eingefügten, durch einen Pseudo- oder einen echten Zufallszahlengenerator (6) erzeugten neutralen Anweisungen multiplexiert.

4. Verfahren nach Anspruch 3, wobei die eingefügten zufällig gesteuerten neutralen Anweisungen von dem Pseudo- oder echten Zufallszahlengenerator (6) unter Verwendung eines anfänglichen Startwerts erzeugt werden, der von einer Zufallsquelle des SOC bereitgestellt wird.

5. Verfahren nach Anspruch 3 oder 4, wobei der Pseudozufallszahlengenerator (6) ein Schieberegister mit linearer Rückkopplung ist.

6. Verfahren nach Anspruch 4, wobei die Zufallsquelle thermisches Rauschen oder asynchron erfasste Ringoszillatoren darstellt.

7. Vorrichtung, die konfiguriert ist, um das Verfahren nach Anspruch 1 bis 6 durchzuführen, und einen eingebetteten Prozessor (2) sowie eine Debug-Infrastruktur eines Prozessorkerns (3) des eingebetteten Prozessors (2) umfasst, wobei die Debug-Infrastruktur konfiguriert ist, um ein Einfügen von zufällig gesteuerten neutralen Anweisungen zu implementieren, die keinen Einfluss auf den eigentlichen Programmcode des Prozessors haben, wobei die Vorrichtung ferner einen Pseudo- oder echten Zufallszahlengenerator (6), eine Zufallsquelle zum Erzeugen eines anfänglichen Startwerts für den Zufallszahlengenerator (6) und Logik (5) umfasst, die konfiguriert sind, um ein Zufallssignal nachzuverarbeiten, das durch das zufällige Einfügungsmuster der neutralen Anweisungen gebildet wird, um sicherzustellen, dass die neutralen Anweisungen mit einer vorgegebenen Rate eingefügt werden.

## Revendications

1. Procédé pour augmenter la sécurité d'un processeur intégré (2) d'un système sur puce (1) en utilisant une infrastructure de débogage existante d'un coeur de processeur (3) du processeur intégré (2), dans lequel des instructions neutres, dont le modèle d'insertion forme un signal aléatoire et n'affecte pas un code de programme réel du processeur (2), sont insérées dans le code de programme réel, le code de programme réel étant exécuté par le processeur (2), où l'infrastructure de débogage est utilisée pour mettre en oeuvre l'insertion des instructions neutres, et où une logique externe (5) hors du coeur du processeur effectue un post-traitement du signal aléatoire pour s'assurer que les instructions neutres sont insérées à un rythme prédéterminé, où les instructions neutres sont des instructions de point d'arrêt conformes à l'architecture de jeu d'instructions standard et des mécanismes de maintien du coeur du processeur (3).

2. Procédé selon la revendication 1, dans lequel les instructions neutres sont une addition ou une autre arithmétique avec le registre 0 comme cible du coeur de processeur (3) si l'architecture du jeu d'instructions a un registre câblé.

3. Procédé selon la revendication 1, dans lequel la logique externe (5) intercepte les commandes de débogage du coeur de processeur (3) et arbitre les accès de débogage réels et les instructions neutres insérées de manière aléatoire en multiplexant des signaux de débogage réels provenant d'un débogueur et les instructions neutres insérées de manière aléatoire générées par un générateur de nombres pseudo-aléatoires ou véritablement aléatoires (6) .

4. Procédé selon la revendication 3, dans lequel les instructions neutres contrôlées de manière aléatoire insérées sont générées par le générateur de nombres pseudo-aléatoires ou véritablement aléatoires (6) au moyen d'une valeur de semence initiale qui est fournie par une source aléatoire du SoC.

5. Procédé selon les revendications 3 ou 4, dans lequel le générateur de nombres pseudo-aléatoires (6) est un registre à décalage à rétroaction linéaire.

6. Procédé selon la revendication 4, dans lequel la source aléatoire est un bruit thermique ou des oscillateurs en anneau capturés de manière asynchrone.

7. Appareil configuré pour exécuter le procédé selon les revendications 1 à 6, comprenant un processeur intégré (2), une infrastructure de débogage d'un coeur de processeur (3) du processeur intégré (2), où l'infrastructure de débogage est configurée pour mettre en oeuvre une insertion d'instructions neutres contrôlées de manière aléatoire qui n'affectent pas un code de programme réel du processeur, l'appareil comprenant en outre un générateur de nombres pseudo-aléatoires ou véritablement aléatoires (6), une source aléatoire pour générer une valeur de semence initiale pour le générateur de nombres aléatoires (6), et une logique (5) configurée pour effectuer un post-traitement d'un signal aléatoire, qui est formé par le modèle d'insertion aléatoire des instructions neutres pour s'assurer que les instructions neutres sont insérées à un rythme prédéterminé.
